# EUROPÄISCHE PATENTSCHRIFT

(11) **EP 3 662 240 B1**
(45) Veröffentlichungstag und Bekanntmachung des Hinweises auf die Patenterteilung: **09.03.2022**
(21) Anmeldenummer: 16739014.5
(22) Anmeldetag: 03.05.2016
(51) Int. Cl.: G01L 1/16, G01L 1/22, G01L 5/00

(54) **MASCHINENELEMENT MIT EINER SENSOREINRICHTUNG UND VERFAHREN ZUR HERSTELLUNG EINES MASCHINENELEMENTS**
MACHINE ELEMENT HAVING A SENSOR DEVICE AND METHOD FOR PRODUCING A MACHINE ELEMENT
ÉLÉMENT DE MACHINE MUNI D'UN DISPOSITIF DE DÉTECTION ET PROCÉDÉ DE FABRICATION D'UN ÉLÉMENT DE MACHINE

(30) Priorität: 04.05.2015 DE 102015106933
(43) Veröffentlichungstag der Anmeldung: 10.06.2020
(73) Patentinhaber: core sensing GmbH, 64287 Darmstadt (DE)
(72) Erfinder: GROCHE, Peter, 64367 Mühltal (DE); KRECH, Martin, 64287 Darmstadt (DE)
(74) Vertreter: Habermann Intellectual Property Partnerschaft von Patentanwälten mbB
(86) Internationale Anmeldenummer: PCT/DE2016/000184
(87) Internationale Veröffentlichungsnummer: WO 2016/177356

(56) Entgegenhaltungen:
- EP-A1- 2 527 809
- DE-A1- 10 109 121
- DE-B3-102009 007 425
- DE-B3-102012 112 947
- US-A1- 2015 030 408

## Beschreibung

Die Erfindung betrifft ein Maschinenelement mit einem Hohlwellenabschnitt und mit einer Sensoreinrichtung zur Erfassung einer sich auf den Hohlwellenabschnitt auswirkenden mechanischen Beanspruchung, wobei die Sensoreinrichtung in dem Hohlwellenabschnitt angeordnet ist, wobei der Hohlwellenabschnitt eine erste radial nach innen ragende Ausformung und eine zweite radial nach innen ragende Ausformung aufweist, und wobei die Sensoreinrichtung mit einer axialen Vorspannung zwischen der ersten radial nach innen ragenden Ausformung und der zweiten radial nach innen ragenden Ausformung formschlüssig festgelegt ist.

Rohr- oder stabförmige Maschinenelemente finden als Wellen oder Hohlwellen, als Achsen oder als Stabstrukturen in vielen Bereichen des Maschinen- und Anlagenbaus Verwendung. Eine möglichst umfassende und präzise Kenntnis über die sich während der Herstellung und Montage, aber auch während der bestimmungsgemäßen Nutzung auf die Maschinenelemente auswirkenden mechanischen Beanspruchungen ist sowohl während der Entwicklungsphase eines neuartigen Maschinenelements als auch während der Verwendung und über die gesamt Nutzungsdauer des Maschinenelements von großem Interesse.

Um die auf das Maschinenelement einwirkenden mechanischen Kräfte und Momente erfassen zu können werden insbesondere in Prüfständen und Entwicklungsversuchen geeignete Sensoren von außen auf einer Oberfläche des Maschinenelements festgelegt und die Sensorwerte erfasst und ausgewertet. In vielen Fällen können dabei Dehnungsmessstreifen verwendet werden, mit denen bereits geringfügige Verformungen an der Oberfläche des Maschinenelements kostengünstig und zuverlässig erfasst werden können.

Eine kontinuierliche Erfassung von Sensorwerten ist beispielsweise in der Wägetechnik, in der Lastüberwachung sowie in der Produktionsüberwachung und Produktionssteuerung vorteilhaft und gegebenenfalls notwendig. Neben einer permanenten Zustandsüberwachung sind auch Sensoreinrichtungen und Verwendungsmöglichkeiten bekannt, mit denen Strukturschädigungen wie beispielsweise Risse oder plastische Verformungen frühzeitig erkannt werden können, die möglicherweise zu einer Beeinträchtigung der Funktion des Maschinenelements oder zu einer Beschädigung führen können und die Betriebsdauer und die Zuverlässigkeit des Maschinenelements reduzieren. In Abhängigkeit von den mit der Sensoreinrichtung erfassten Veränderungen oder Strukturschädigungen kann gegebenenfalls ein demnächst drohendes Versagen des Maschinenelements erkannt werden, bevor ein kritischer Zustand eintritt.

Um eine möglichst zuverlässige und präzise Erfassung der sich auf das Maschinenelement auswirkenden mechanischen Beanspruchungen zu ermöglichen ist eine möglichst präzise und dauerhafte Festlegung der Sensoreinrichtung an dem Maschinenelement erforderlich. Gleichzeitig sollte vermieden werden, dass die Sensoreinrichtung während der Messdauer, während der bestimmungsgemäßen Verwendung und auch während der Herstellung und Montage einer übermäßigen Beanspruchung ausgesetzt wird, die zu Fehlmessungen oder zu einer Beschädigung der Sensoreinrichtung führen könnten. Gleichzeitig sollten im Vergleich zu einem herkömmlichen Maschinenelement auf Grund der Sensoren keine Einschränkungen und der Handhabung und im Gebrauch auftreten, wie sie beispielsweise durch auf einer Außenseite des Maschinenelements aufgebrachte Sensoren oder durch Fügestellen verursacht werden, die gegebenenfalls für die Anbringung von Sensoren erforderlich werden.

Es ist beispielsweise aus EP 1 597 128 B1 bekannt, dass die Sensoreinrichtung zum Schutz vor äußerlichen Einwirkungen und Umgebungsbedingungen in einen Hohlraum einer Welle angeordnet ist. Die Sensoreinrichtung ist in dem Hohlraum der Welle vor betriebsbedingten mechanischen und schematischen Einflüssen sowie vor eventuell mutwilligen Beschädigungen geschützt. Mit der in dem Hohlraum angeordneten Sensoreinrichtung können Schwingungen und Körperschall des Maschinenelements erfasst und ausgewertet werden. Eine dauerhaft präzise Festlegung der Sensoreinrichtung in dem Hohlraum ist nicht erforderlich, da bei der in Rede stehenden Ausgestaltung keine Verformung des Hohlraums des Maschinenelements mit der Sensoreinrichtung erfasst werden soll.

Es sind Hohlwellen bekannt, bei denen eine Sensoreinrichtung in einem Innenraum der Hohlwelle klebend festgelegt oder kraftschlüssig eingepresst ist. Obwohl die Position der Sensoreinrichtung innerhalb der Hohlwelle vergleichsweise genau vorgegeben werden kann, eignen sich derart angeordnete Sensoreinrichtungen nur bedingt zur umfassenden Erfassung von axialen und radialen Verformungen der Hohlwelle, da eine zuverlässige Auswertung der Sensorsignale üblicherweise voraussetzt, dass der betreffende Sensor oder die Sensoreinrichtung mit einer Vorspannung an der Messstelle festgelegt sind. Zudem fällt ein erheblicher Montageaufwand für die Anordnung und Festlegung der Sensoreinrichtung an. Beispielsweise ist in der Druckschrift US 2015/030408 eine Vorrichtung und ein Verfahren offenbart, wobei die in einer Hohlwelle angeordnete Sensoreinrichtung in einer axialen Richtung in der Hohlwelle festlegbar ist. Dabei wird die Sensoreinrichtung in einen zylinderförmigen Hohlraum eingebracht, der einen konstanten Durchmesser in der Hohlwelle aufweist. Die Sensoreinheit wird anschließend in axialer Richtung durch radial auf die Hohlwelle einwirkende Kräfte in der Hohlwelle festgelegt. Eine drehfeste Festlegung der Sensoreinrichtung, wodurch auch auf die Hohlwelle einwirkende Torsionskräfte verlustarm auf die Sensoreinheit übertragen werden können ist dabei nicht thematisiert.

Es wird deshalb als eine Aufgabe der vorliegenden Erfindung angesehen, ein Maschinenelement der eingangsgenannten Gattung so auszugestalten, dass die Sensoreinrichtung möglichst geschützt an dem Maschinenelement angeordnet ist und über einen möglichst langen Zeitraum eine zuverlässige und präzise Erfassung einer sich auf das Maschinenelement auswirkenden mechanischen Beanspruchung erlaubt.

Diese Aufgabe wird erfindungsgemäß dadurch gelöst, dass eine Anschlagfläche der ersten radial nach innen ragenden Ausformung und/oder eine Anschlagfläche der zweiten radial nach innen ragenden Ausformung eine in Umfangsrichtung profilierte Oberfläche aufweist, die mit der Sensoreinrichtung einen Eingriff bildet. Die beiden radial nach innen ragenden Ausformungen können beispielsweise umlaufende Wulste in einer zylinderförmigen, einen Innenraum des Hohlwellenabschnitts begrenzenden Oberfläche sein. In vorteilhafter Weise weisen die radial nach innen ragenden Ausformungen jeweils einen geringeren Innendurchmesser als die in axialer Richtung auf beiden Seiten der jeweiligen Ausformung angrenzenden Bereiche des Hohlwellenabschnitts auf. Eine besonders geringe Beeinflussung und Beeinträchtigung der Eigenschaften des Hohlwellenabschnitts kann dadurch erreicht werden, dass bei jeder nach innen ragenden Ausformung die beiden angrenzenden Bereiche des Hohlwellenabschnitts einen übereinstimmenden ersten Innendurchmesser aufweisen und dass die dazwischen ausgebildete radial nach innen vorspringende Ausformung einen zweiten Innendurchmesser aufweist, der geringer als der erste Innendurchmesser ist.

Die radial nach innen vorspringende Ausformung kann eine dreieckige Querschnittsfläche mit sich verjüngenden bzw. konisch zulaufenden Seitenflächen aufweisen. Es ist ebenfalls möglich, dass die radial nach innen vorspringende Ausformung eine asymmetrische Formgebung der Querschnittsfläche aufweist.

Die nach innen ragenden Ausformungen können jeweils eine oder mehrere Anschlagflächen bilden, an denen einander gegenüberliegende Stirnseiten der Sensoreinrichtung anliegen können.

Die Sensoreinrichtung ist zwischen den beiden radial nach innen ragenden Ausformungen formschlüssig festgelegt, sodass eine unerwünschte axiale Verlagerung der Sensoreinrichtung ausgeschlossen werden kann. Zudem kann durch die Vorgabe eines Abstands der einander zugewandten Anschlagflächen der nach innen vorspringenden Ausformungen in axialer Richtung einen Anpressdruck auf die dazwischen befindliche Sensoreinrichtung ausgeübt werden und dadurch eine axiale Vorspannung der Sensoreinrichtung erzwungen werden.

Die axiale Vorspannung kann dabei ausreichend groß vorgegeben werden, so dass die Sensoreinrichtung kraftschlüssig hinreichend drehfest relativ zu dem umgebenden Hohlwellenabschnitt festgelegt ist, um auch angreifende Drehmomente und Torsionsbelastungen zuverlässig erfassen zu können. Die axiale Vorspannung ist dabei zweckmäßigerweise auch ausreichend groß vorgegeben, um schleichenden Kriecheffekten entgegenzuwirken, die ansonsten bei den üblicherweise auftretenden Temperaturen und mechanischen Belastungen während der bestimmungsgemäßen Verwendung auftreten könnten. Durch die Vorspannung der Sensoreinrichtung kann zudem bei geeignet ausgewählten und angebrachten Sensoren ein Messsignal ermöglicht werden, das über weite Bereiche linear von der zu messenden Verformung abhängt und eine präzise Auswertung erleichtert.

Die in Umfangsrichtung profilierte Oberfläche kann beispielsweise eine wellenförmige oder zahnförmige Strukturierung aufweisen. Es ist ebenfalls denkbar, dass die Oberfläche in axialer Richtung verlaufende Nuten oder Wulste aufweist. Die Oberfläche kann auch aufgeraut oder mit einer ausreichend unebenen oder rauen Beschichtung versehen sein.

In Abhängigkeit von der vorgegebenen Profilierung dieser Oberfläche bildet sich nach dem Einbringen und Festlegen der Sensoreinrichtung ein Eingriff mit einem hohen Kraftschluss und gegebenenfalls auch mit einem Formschluss zwischen der Sensoreinrichtung und der profilierten Oberfläche aus. Durch diesen Eingriff wird die Sensoreinrichtung drehfest in dem Hohlwellenabschnitt festgelegt, sodass auch große Drehmomente zuverlässig erfasst werden können.

Um das Einführen und die zuverlässige Positionierung der Sensoreinrichtung zwischen den nach innen ragenden Ausformungen zu erleichtern ist vorgesehen, dass die Sensoreinrichtung eine erste Stirnseite und/oder eine zweite Stirnseite mit einem umlaufenden Randbereich und mit einer in dem Randbereich ausgebildeten Fase aufweist.

Einer vorteilhaften Ausgestaltung des Erfindungsgedankens zu Folge ist vorgesehen, dass die erste radial nach innen ragende Ausformung und/oder die zweite radial nach innen ragende Ausformung eine in einem Winkel zu einer Mittenachse des Hohlwellenabschnitts geneigte Anschlagfläche aufweisen. Die Anschlagfläche kann beispielsweise einen Winkel, bzw. eine Neigung der Anschlagsfläche zwischen 20 und 30 Grad aufweisen. Die radial nach innen ragenden Ausformungen lassen sich mit einer in einem Winkel geneigten Anschlagfläche einfach und kostengünstig herstellen. Zudem kann durch eine geneigte Anschlagfläche die gewünschte Vorspannung der Sensoreinrichtung mit geringen Fehlertoleranzen über einen langen Zeitraum aufrechterhalten werden.

Bei rotationssymmetrisch ausgestalteten Maschinenelementen und insbesondere bei bestimmungsgemäß rotierenden Maschinenelementen ist es zweckmäßig, dass die erste radial nach innen ragende Ausformung und/oder die zweite radial nach innen ragende Ausformung in Umfangsrichtung eine gleichbleibende Querschnittsfläche aufweisen. Auf diese Weise kann mit einer gleichbleibenden bzw. rotationssymmetrischen Formgebung der Ausformungen das Risiko einer unerwünschten Unwucht während der bestimmungsgemäßen Rotation des Maschinenelements reduziert werden. Zudem wird durch die in Umfangsrichtung gleichbleibende Querschnittsfläche der nach innen ragenden Ausformungen eine Ausrichtung der Sensoreinrichtung längs einer Mittenachse begünstigt und das Risiko unerwünschter Querkraftkomponenten, die in radialer Richtung auf die Sensoreinrichtung einwirken könnten, erheblich reduziert.

Um den Eingriff zwischen der Sensoreinrichtung und den nach innen ragenden Ausformungen zu verstärken und zu begünstigen ist vorgesehen, dass die Sensoreinrichtung eine erste Stirnseite und/oder eine zweite Stirnseite mit einem umlaufenden Randbereich mit einer in Umfangsrichtung profilierten Formgebung aufweist, die mit der ersten radial nach innen ragenden Ausformung bzw. der zweiten radial nach innen ragenden Ausformung einen Eingriff bildet. Die in Umfangsrichtung profilierte Formgebung in dem Randbereich der Stirnseiten der Sensoreinrichtung ist zweckmäßigerweise an die Oberflächenprofilierung der Anschlagflächen der nach innen ragenden Ausformungen angepasst. Auf diese Weise kann mit geringem Aufwand eine zuverlässige und äußerst drehfeste Befestigung der Sensoreinrichtung in dem Hohlwellenabschnitt erfolgen. Die in Umfangsrichtung profilierte Formgebung kann in vorteilhafter Weise mit einer ebenfalls umlaufenden Fase kombiniert werden. Durch einen derartigen formschlüssigen Eingriff in Umfangsrichtung kann erreicht werden, dass die Sensoreinrichtung verdrehsicher in dem Hohlwellenabschnitt festgelegt ist und dabei Drehmomente und durch Torsion verursachte Verformungen zuverlässig und präzise mit der Sensoreinrichtung erfasst werden können. Ein unerwünschtes Verdrehen der Sensoreinrichtung relativ zu dem umgebenden Hohlwellenabschnitt tritt erst dann ein, wenn die von außen einwirkenden Kräfte und Momente eine plastische Verformung des formschlüssigen Eingriffs zwischen der Sensoreinrichtung und den angrenzenden radial nach innen vorspringenden Ausformungen erzwingen, bzw. den formschlüssigen Eingriff zerstören.

Es ist vorteilhaft, dass die Sensoreinrichtung eine an eine Formgebung der ersten bzw. zweiten radial nach innen ragenden Ausformung angepasste Formgebung des umlaufenden Randbereichs einer ersten Stirnseite und/oder zweiten Stirnseite der Sensoreinrichtung aufweist. Auf diese Weise kann eine möglichst große Kontaktfläche ermöglicht werden und erreicht werden, dass die Sensoreinrichtung auch bei nur geringförmig nach Innen ragenden Ausformungen großflächig an entsprechenden Anschlagflächen dieser Ausformungen anliegt.

Gemäß einer vorteilhaften Ausgestaltung des Erfindungsgedankens ist vorgesehen, dass die Sensoreinrichtung mindestens einen Verformungssensor aufweist. Geeignete Vorformungssensoren sind beispielsweise Dehnungsmessstreifenanordnungen oder Piezosensoren, bzw. Quarzscheibensensoren, mit denen kostengünstig sehr präzise Messungen von Verformungen des Hohlwellenabschnitts möglich sind, die durch eine einwirkende mechanische Beanspruchung erzeugt werden. Durch die in axialer Richtung erzeugte Vorspannung der Sensoreinrichtung können die jeweils verwendeten Verformungssensoren mit einer entsprechenden Vorspannung betrieben werden und dadurch nicht nur Momente, sondern auch in axialer Richtung einwirkende Zug-und Druckkräfte zuverlässig erfasst werden. Zudem weisen zahlreiche Verformungssensoren, die unter Vorspannung an dem jeweiligen Messort festgelegt werden können, über einen weiten Messbereich hinweg eine lineare und damit dauerhaft präzise auswertbare Abhängigkeit der jeweils erzeugten Sensorsignale von der verursachenden Verformung auf.

Eine Anordnung mehrerer in Reihe geschalteter piezoelektrischer Elementarsensoren wie beispielsweise eine Kombination von mehreren Quarzen mit verschiedenen Schnittrichtungsebenen erlaubt eine Erfassung mehrerer verschieden gerichteter Komponenten von einwirkenden Kräften und Momenten und bietet darüber hinaus auch den Vorteil, dass ein aufwändiges Verkleben von anderen Elementarsensoren wie beispielsweise von Dehnungsmessstreifen entfällt.

Für zahlreiche Anwendungsfälle ist es zweckmäßig, dass das Maschinenelement eine Welle ist. Der Hohlwellenabschnitt kann sich auch in axialer Richtung im Wesentlichen über die gesamte Welle hinweg erstrecken, so dass das Maschinenelement eine Hohlwelle ist. Es ist ebenfalls möglich, dass der Hohlwellenabschnitt in axialer Richtung lediglich eine kurze Erstreckung aufweist, die an die Abmessungen der darin aufzunehmenden Sensoreinrichtung angepasst ist, so dass nur eine möglichst geringe mechanische Beeinflussung einer massiven Welle oder eines massiven Maschinenelements auftritt. Das Maschinenelement kann auch eine Achse oder eine stabförmige Komponente einer Stabstruktur in einer Maschine oder Anlage sein.

Die Erfindung betrifft auch ein Verfahren zur Herstellung eines Maschinenelements mit einem Hohlwellenabschnitt und mit einer darin angeordneten Sensoreinrichtung zur Messung einer sich auf den Hohlwellenabschnitt auswirkenden mechanischen Beanspruchung, wobei die Sensoreinrichtung mit einer axialen Vorspannung zwischen einer ersten radial nach innen vorspringenden Ausformung und einer zweiten radial nach innen vorspringenden Ausformung formschlüssig festgelegt wird.

Erfindungsgemäß wird dabei in einem ersten Ausformungsschritt eine erste radial nach innen vorspringende Ausformung in dem Hohlwellenabschnitt des Maschinenelements erzeugt. In einem nachfolgenden Sensoranordnungsschritt wird eine Sensoreinrichtung in dem Hohlwellenabschnitt an der ersten radial nach innen vorspringenden Ausformung formschlüssig angelegt. In einem nachfolgenden Festlegungsschritt wird eine zweite radial nach innen vorspringende Ausformung in dem Hohlwellenabschnitt erzeugt, wobei mit einem in den Hohlwellenabschnitt eingeführten Dorn eine in Umfangsrichtung profilierte Formgebung der ersten und/oder zweiten radial nach innen vorspringenden Ausformung vorgegeben wird.

Während des ersten Ausformungsschritts kann ein umformtechnisches Verfahren zur Reduzierung eines Durchmessers des Hohlwellenabschnitts durchgeführt werden. Die Anordnung und Festlegung der Sensoreinrichtung wird demzufolge erfindungsgemäß in den Herstellungsprozess des Maschinenelements integriert, was mit geringem zusätzlichem Aufwand möglich ist. Dabei kann bereits während der Einführung der Sensoreinrichtung in den Hohlwellenabschnitt und insbesondere während der Ausbildung der zweiten radial nach innen vorspringenden Ausformung, durch welche die axiale Vorspannung der Sensoreinrichtung erzeugt und die Sensoreinrichtung in dem Hohlwellenabschnitt festgelegt wird, eine kontinuierliche Erfassung und Auswertung von Sensorsignalen erfolgen. Dadurch lassen sich sowohl die gewünschte Vorspannung der Sensoreinrichtung zuverlässig vorgeben als auch eine funktionsfähige und geeignete Festlegung der Sensoreinrichtung in dem Hohlwellenabschnitt überprüfen.

Der Dorn weist zu diesem Zweck eine Profilierung in seinem Endbereich auf, die eine Negativform der gewünschten Profilierung der nach innen vorspringenden Ausformungen darstellt. Während beispielsweise einer Kaltmassivumformung des Maschinenelements fließt etwas Material des Rohlings, bzw. des Maschinenelements in die durch den Endbereich des Dorns vorgegebene Negativform, wodurch eine entsprechende Profilierung der radial nach innen vorspringenden Ausformungen erzeugt wird. Nach dem Entfernen des Dorns aus dem Hohlwellenabschnitt bleibt die vorgegebene Oberflächenprofilierung bestehen.

Die Herstellung des Maschinenelements kann besonders kostengünstig und einfach dadurch erfolgen, dass die erste radial nach innen vorspringende Ausformung und die zweite radial nach innen vorspringende Ausformung durch Kaltmassivumformung erzeugt werden. Zu diesem Zweck ist es lediglich erforderlich, dass das Maschinenelement im Bereich der radial nach innen vorspringenden Ausformungen aus einem Material besteht, das für eine Kaltmassivumformung geeignet ist. Da für zahlreiche Verwendungszwecke und Einsatzbereiche das Maschinenelement aus Metall bestehen kann oder soll, lässt sich für derartige Maschinenelemente das erfindungsgemäße Herstellungsverfahren in vorteilhafter Weise in Kombination mit einer Kaltmassivumformung einsetzen.

Gemäß einer besonders vorteilhaften Ausgestaltung des Erfindungsgedankens ist vorgesehen, dass die radial nach innen vorspringenden Ausformungen durch Rundkneten erzeugt werden. Zweckmäßigerweise werden zumindest der Hohlwellenabschnitt und gegebenenfalls das gesamte Maschinenelement ausgehend von einem Rohling durch Rundkneten in die gewünschte Formgebung überführt. Für eine besonders einfache Integration der Sensoreinrichtung ist eine vorgefertigte Rohlingformgebung zweckmäßig, die an das Herstellungsverfahren angepasste Außen- und Innenkonturverläufe aufweist. Zu diesem Zweck kann ein in den Hohlraum eingeführter Dorn verwendet werden, der eine geeignete Ausgestaltung und Formgebung eines Endbereichs aufweist und in Abhängigkeit von seiner Positionierung innerhalb des Hohlwellenabschnitts die mit dem Rundkneten erzwungene Formgebung einer radial nach innen vorspringenden Ausformung beeinflusst, beziehungsweise vorgibt.

Nachfolgend werden Ausführungsbeispiele des Erfindungsgedankens näher erläutert, die in der Zeichnung dargestellt sind. Es zeigt:
Fig. 1 bis 4 eine schematische Darstellung eines Verfahrensablaufs während der Herstellung einer Hohlwelle mit einer darin angeordneten Sensoreinrichtung,
Fig. 5 eine schematische Darstellung einer Werkzeugmaschine zum Rundkneten während der Bearbeitung eines Hohlwellenabschnitts,
Fig. 6 in auseinandergezogener Darstellung ein Dorn und eine mit diesem Dorn erzwungene Profilierung eines Hohlwellenabschnitts während der erfindungsgemäßen Herstellung der Hohlwelle mit der darin angeordneten Sensoreinrichtung,
Fig. 7 eine schematische Darstellung einer Hohlwelle mit einer darin angeordneten Sensoreinrichtung sowie mit einer Verstärker- und Übertragungseinrichtung,
Fig. 8 eine schematische und teilweise geschnitten gezeigte Darstellung einer Sensoreinrichtung mit mehreren Verformungssensoren in einem radial zurückgesetzten Gürtelbereich,
Fig. 9 und 10 jeweils eine schematische Darstellung von verschiedenen Möglichkeiten zur Erzeugung eines in Umfangsrichtung ausgebildeten Formschlusses zwischen der Sensoreinrichtung und dem umgebenden Hohlwellenabschnitt,
Fig. 11 eine schematische Darstellung eines Teilbereichs der Sensoreinrichtung, die in Umfangsrichtung formschlüssig in einem umgebenden Bereich des Hohlwellenabschnitts festgelegt ist, und
Fig. 12 eine schematische Darstellung einer abweichend ausgestalteten Sensoreinrichtung mit mehreren piezoelektrisch kontaktierten Quarzscheiben, wobei die Sensoreinrichtung in einer Welle mit einem in axialer Richtung begrenzten Hohlwellenabschnitt angeordnet ist.

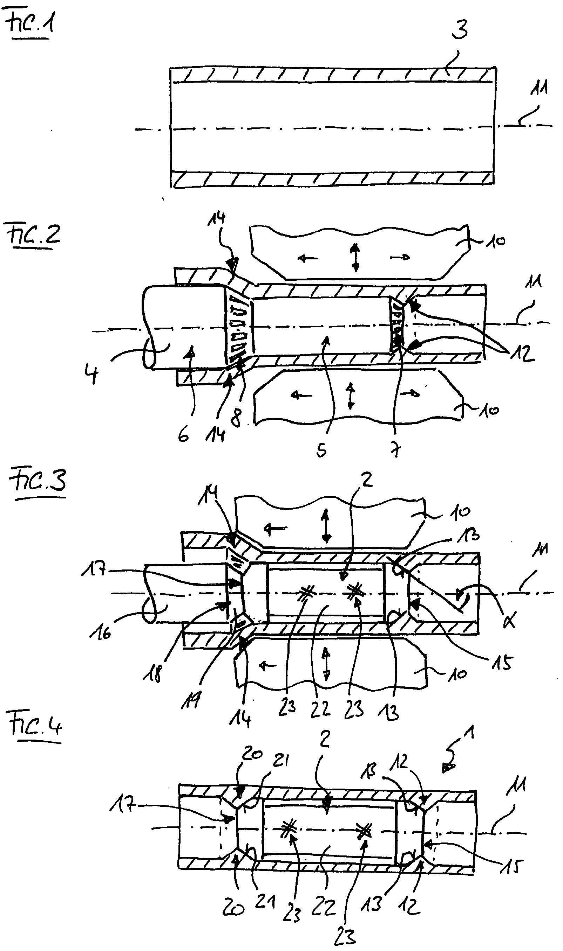

In den Fig. 1 bis 4 werden exemplarisch verschiedene Schritte innerhalb eines erfindungsgemäßen Herstellungsverfahrens gezeigt, mit dem eine Hohlwelle 1 mit einer darin unter Vorspannung festgelegten Sensoreinrichtung 2 hergestellt wird.

Für die Herstellung kann ein rohrförmiger Rohling 3 verwendet werden, wie er in Fig. 1 gezeigt ist. In den rohrförmigen Rohling 3 wird ein Dorn 4 eingeführt, der einen ersten Abschnitt 5 mit einem etwas geringeren Radius und einen zweiten Abschnitt 6 mit einem etwas größeren Radius aufweist. Die jeweiligen Endbereiche der beiden Abschnitte 5 und 6 weisen jeweils eine in Umfangsrichtung profilierte Fase 7 und 8 auf. Die Länge des ersten Abschnitts 5 und der Abstand der beiden Fasen 7 und 8 entsprechen näherungsweise der Länge der Sensoreinrichtung 2 in axialer Richtung, wobei die Sensoreinrichtung 2 zweckmäßigerweise etwas länger ist.

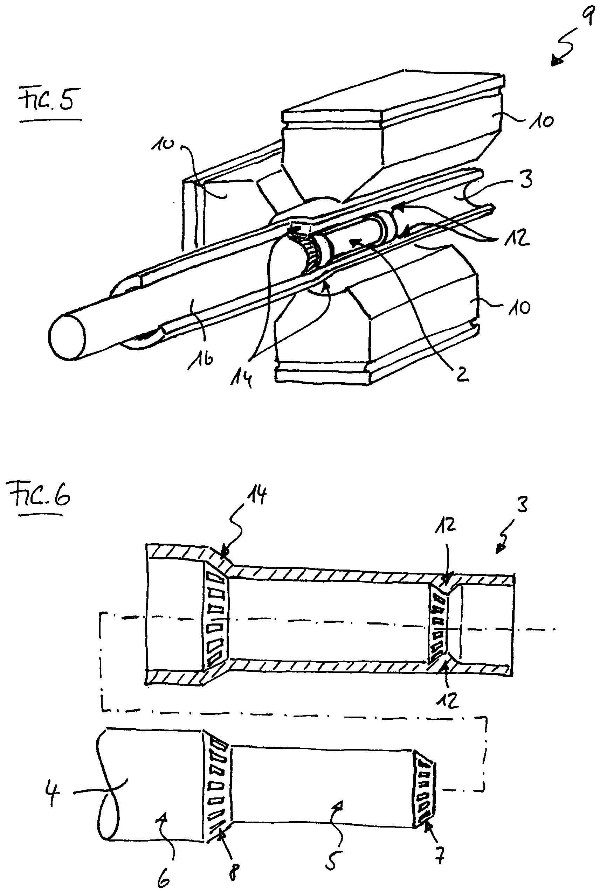

Mit einer geeigneten Werkzeugmaschine 9, die beispielhaft in Fig. 5 dargestellt ist, wird ein in Fig. 2 rechts befindlicher erster Abschnitt des Rohlings 3 durch Rundkneten hinsichtlich des Umfangs reduziert, so dass ein äußerer Umfang bereits der gewünschten Formgebung der Hohlwelle 1 entspricht. Bei einer geeigneten Relativbewegung der einzelnen Rundknetwerkzeuge 10, die oszillierend auf den Rohling 3 einwirken, während der Rohling 3 längs seiner Mittenachse 11 relativ zu der Werkzeugmaschine 9 verlagert wird, entsteht an einem vorderen Ende 12 des Dorns 4 eine nach innen ragende ringförmige Ausformung 12. Das in diesem Bereich nach innen fließende Material des Rohlings 3 fließt an die in Umfangsrichtung profilierte Fase 7 des Dorns 3, der als Negativform wirkt und eine entsprechende Profilierung einer schrägen Anlagefläche 13 der nach innen ragenden Ausformung 12 erzeugt. Der Neigungswinkel α der Anlagefläche 13 relativ zu der Mittenachse 11 beträgt etwa 21°.

Durch eine Bearbeitung des Rohlings 3 mit der Werkzeugmaschine 9 wird ein sich konisch verjüngender Bereich 14 des Rohlings 3 im Bereich der Fase 8 des Dorns 4 erzeugt. Auch dieser Bereich 14 weist eine an die Profilierung der Fase 8 angepasste, bzw. dadurch vorgegebene Profilierung in Umfangsrichtung auf.

Anschließend wird der Dorn 4 herausgezogen und die Sensoreinrichtung 2 in den Rohling 3 eingeführt, bis eine erste Stirnseite 15 der Sensoreinrichtung 2 an der nach innen ragenden Ausformung 12 anliegt. Danach wird ein zweiter Dorn 16 in den Rohling 3 eingeführt und an eine zweite Stirnseite 17 der Sensoreinrichtung 2 angedrückt, so dass die Sensoreinrichtung 2 unter axialer Vorspannung steht. Der zweite Dorn 16 weist einen Durchmesser auf, der dem Durchmesser des ersten Abschnitts 5 des Dorns 4 entspricht. An einem der Sensoreinrichtung 2 zugewandten vorderen Ende 18 weist der Dorn 16 ebenfalls eine Fase 19 auf, wie es in Fig. 3 gezeigt ist. Anstelle des zweiten Dorns 16 könnte auch der erste Dorn 4 wieder eingeführt und an die zweite Stirnseite 17 der Sensoreinrichtung 2 angedrückt werden.

Der Rohling 3 mit der darin angeordneten Sensoreinrichtung 2 wird zusammen mit dem Dorn 16 relativ zu der Werkzeugmaschine 9 verlagert, während mit den oszillierenden Rundknetwerkzeugen 10 über den zunächst noch sich konisch verjüngenden Bereich 14 hinweg der Rohling 3 in die endgültige Formgebung der Hohlwelle 1 überführt wird. Dabei bildet sich eine zweite nach innen ragende Ausformung 20 aus, deren Formgebung durch die zweite Stirnseite 17 der Sensoreinrichtung 2 und die Fase 19 des Dorns 16 vorgegeben wird. Eine der Sensoreinrichtung 2 zugewandte Anlagefläche 21 der Ausformung 20 behält im Wesentlichen die Profilierung des sich konisch verjüngenden Bereichs 14 bei, der in die zweite nach innen ragende Ausformung 20 überführt wird. Die Sensoreinrichtung 2 wird unter der durch den Dorn 16 vorgegebenen Vorspannung in axialer Richtung formschlüssig zwischen der ersten nach innen ragenden Ausformung 12 und der neu gebildeten zweiten nach innen ragenden Ausformung 20 festgelegt, wobei ein Anschmiegen des sich konisch verjüngenden Bereichs 14 an die zweite Stirnseite 17 zu einer zusätzlichen axial gerichteten Kraftkomponente bzw. Vorspannung in der Sensoreinrichtung 2 führt. Die fertiggestellte Hohlwelle 1 mit der darin festgelegten Sensoreinrichtung 2 ist in Fig. 4 abgebildet. Durch den Umformvorgang und den dadurch erzwungenen Materialfluss wird die Sensoreinrichtung 2 in axialer Richtung zusammengepresst und gestaucht, so dass die Vorspannung während des den Durchmesser reduzierenden Umformvorgangs erzeugt bzw. aufrecht erhalten wird.

Der Neigungswinkel α der ersten radial nach innen ragenden Ausformung 12 kann auch abweichend vorgegeben werden, da die Anlagefläche 13 ausschließlich mit dem Ziel eines zuverlässigen Formschlusses gestaltet werden kann. Dagegen ist der Neigungswinkel α bei der Anlagefläche 21 der zweiten nach innen ragenden Ausformung 20 auch im Hinblick auf den gewünschten Materialfluss während des Umformvorgangs und für die Erzeugung einer in axialer Richtung wirkenden Querkraft bei dem radial einwirkenden Rundknetvorgang von Bedeutung und sollte deshalb zweckmäßigerweise in einem Bereich zwischen 20° und 30° liegen.

Durch die vorab erzeugte Profilierung in Umfangsrichtung des sich verjüngenden Bereichs 14 sowie durch eine entsprechende Profilierung der ersten nach innen ragenden Ausformung 12 wird gleichzeitig ein formschlüssiger Eingriff in Umfangsrichtung erzeugt und die Sensoreinrichtung 2 drehfest zwischen den beiden nach innen ragenden Ausformungen 12 und 20 in einem Innenraum der Hohlwelle 1 festgelegt.

Die Sensoreinrichtung 2 weist einen geeigneten Sensorträger 22 auf, an dem mehrere Verformungssensoren 23 festgelegt sind. Die mit den Verformungssensoren 23 gemessenen Sensorwerte können beispielsweise drahtlos an eine Auswerteeinrichtung übermittelt werden.

In Fig. 6 sind der Dorn 4 und der Rohling 3 nach dem in Fig. 2 gezeigten Fertigungsschritt zur Veranschaulichung in auseinandergezogener Darstellung abgebildet. Die Profilierungen der Fasen 7 und 8 des Dorns 4 erzeugen eine daran angepasste Profilierung der Anlageflächen 13 und 21, zwischen denen die Sensoreinrichtung 2 in Umfangsrichtung drehfest und in axialer Richtung vorgespannt jeweils formschlüssig festgelegt wird.

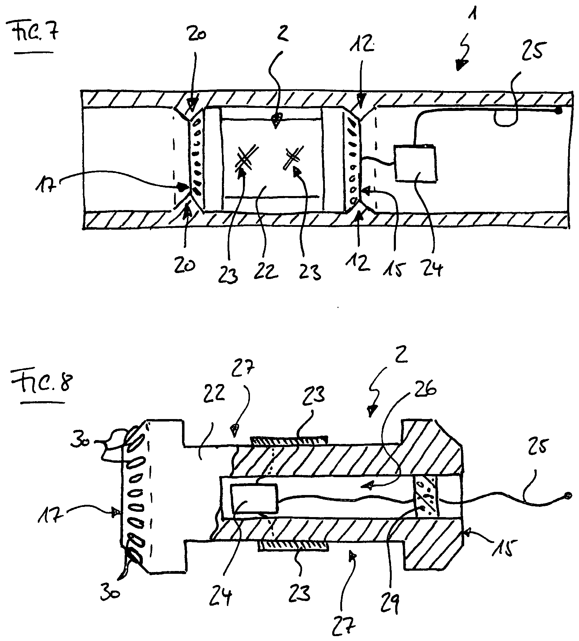

In Fig. 7 ist exemplarisch die in der Hohlwelle 1 zwischen den beiden radial nach innen vorspringenden Ausformungen 12 und 20 festgelegte Sensoreinrichtung 2 zusammen mit einer Verstärker- und Übermittlungseinrichtung 24 sowie einer Antenne 25 zur drahtlosen Übermittlung der Sensorwerte an eine externe und nicht dargestellte Auswerteeinrichtung dargestellt. Die Verstärker- und Übermittlungseinrichtung 24 ist unmittelbar benachbart zu der Sensoreinrichtung 2 in der Hohlwelle 1 angeordnet und durch die Stirnseite 15 hindurch elektrisch leitend mit den Verformungssensoren 23 auf dem Sensorträger 22 verbunden.

Bei einer in Fig. 8 exemplarisch dargestellten abweichenden Ausgestaltung der Sensoreinrichtung 2 befindet sich die Verstärker- und Übermittlungseinrichtung 24 in einem Hohlraum 26 im Inneren des Sensorträgers 22. Die in einem radial zurückgesetzten Gürtelbereich 27 des Sensorträgers 22 auf einer äußeren Umfangsfläche 28 festgeklebten Verformungssensoren 23 sind elektrisch leitend mit der Verstärker- und Übermittlungseinrichtung 24 verbunden. Die Antenne 25 ist in axialer Richtung durch eine Abdichtung 29 hindurch aus dem Sensorträger 22 herausgeführt.

Um in Umfangsrichtung einen zuverlässigen Formschluss mit der umgebenden Hohlwelle 1, bzw. mit den Anlageflächen 13 und 21 der radial nach innen vorspringenden Ausformungen 12 und 20 zu ermöglichen weist die Sensoreinrichtung 2 auf beiden Stirnseiten 15 und 17 jeweils eine Anzahl von zahnförmigen, bzw. nasenförmigen Ausformungen 30 auf.

Die Profilierung der Anlageflächen 13 und 21 sowie die Ausbildung von zahnförmigen bzw. nasenförmigen Ausformungen 30 im Bereich der Stirnseiten 15 und 17 der Sensoreinrichtung 2 kann auf verschiedene Art und Weise erzeugt werden.

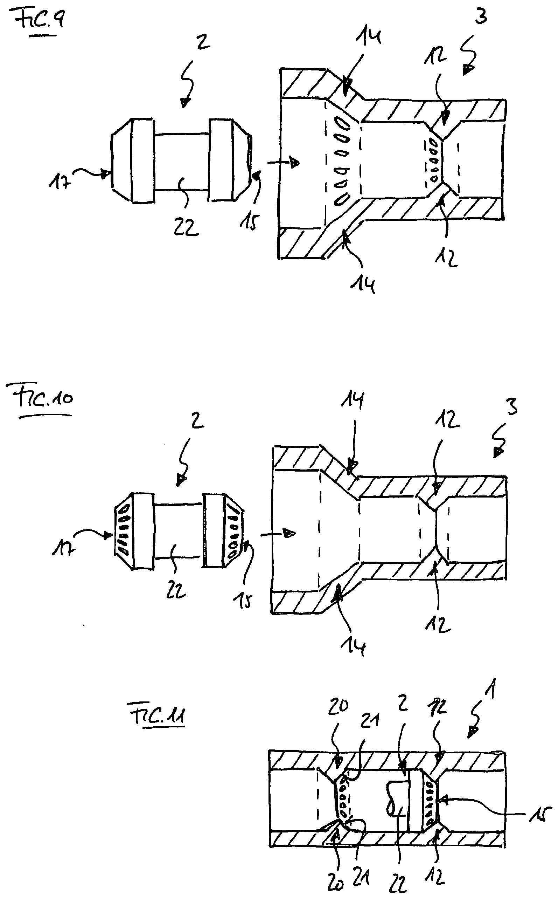

Bei dem in Fig. 9 schematisch dargestellten Ausführungsbeispiel wird durch eine geeignete Profilierung der Fasen 7 und 8 des innen in dem Rohling 3 angeordneten Dorns 4 eine daran angepasste, bzw. dadurch erzwungene Profilierung der Anlagefläche 13 und des sich verjüngenden Bereichs 14 vorgegeben. Die beiden Stirnseiten 15 und 17 der anschließend eingeführten Sensoreinrichtung 2 bestehen aus einem weniger harten Material als der Rohling 3, so dass dessen Profilierung bei einem axialen Einpressen der Sensoreinrichtung 2 und einem anschließenden Umformen des sich verjüngenden Bereichs 14 beibehalten wird und eine daran angepasste Profilierung der Stirnseiten 15 und 17 der Sensoreinrichtung 2 erzwungen wird.

Bei dem in Fig. 10 ebenfalls schematisch dargestellten Ausführungsbeispiel wird die Profilierung an den Stirnseiten 15 und 17 der Sensoreinrichtung 2 vorgegeben und auf die Anlageflächen 13 und 21 der radial nach innen vorspringenden Ausformungen 12 und 20 übertragen.

In beiden Fällen wird ein in Fig. 11 schematisch dargestellter Formschluss bewirkt, der in Umfangsrichtung zwischen den Stirnseiten 15 und 17 und den jeweils zugeordneten Anlageflächen 13 und 21 besteht und ein unerwünschtes Verdrehen der Sensoreinrichtung 2 relativ zu der umgebenden Hohlwelle 1 verhindert. Zur Veranschaulichung ist in Fig. 11 lediglich ein Teilbereich der Sensoreinrichtung 2 in der Abbildung rechts dargestellt. Die in Umfangsrichtung vorgegebene Profilierung befindet sich sowohl auf der rechts dargestellten Stirnseite 15 der Sensoreinrichtung 2 als auch in der links gezeigten Anlagefläche 21 der radial nach innen vorspringenden Ausformung 20, so dass ein jeweils von beiden Oberflächen ausgehender formschlüssiger Eingriff zwischen der Sensoreinrichtung 2 und der Hohlwelle 1 vorgegeben ist.

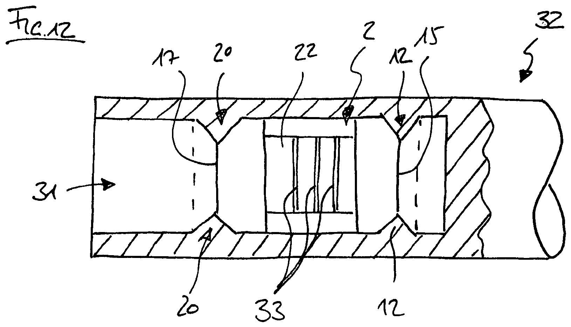

Bei dem in Fig. 12 schematisch dargestellten Ausführungsbeispiel ist die Sensoreinrichtung 2 in einer Sacklochbohrung 31 in einer Welle 32 angeordnet. Die Sensoreinrichtung 2 weist mehrere piezoelektrische Quarzscheiben 33 mit unterschiedlichen Schnittrichtungsebenen auf, die in Reihe geschaltet in axialer Richtung hintereinander angeordnet sind.

## Patentansprüche

1. Maschinenelement (1, 32) mit einem Hohlwellenabschnitt und mit einer Sensoreinrichtung (2) zur Erfassung einer sich auf den Hohlwellenabschnitt auswirkenden mechanischen Beanspruchung, wobei die Sensoreinrichtung (2) in dem Hohlwellenabschnitt angeordnet ist, wobei der Hohlwellenabschnitt eine erste radial nach innen ragende Ausformung (12) und eine zweite radial nach innen ragende Ausformung (20) aufweist, und wobei die Sensoreinrichtung (2) mit einer axialen Vorspannung zwischen der ersten radial nach innen ragenden Ausformung (12) und der zweiten radial nach innen ragenden Ausformung (20) formschlüssig festgelegt ist, **dadurch gekennzeichnet, dass** eine Anschlagfläche (13) der ersten radial nach innen ragenden Ausformung (12) und/oder eine Anschlagfläche (21) der zweiten radial nach innen ragenden Ausformung (20) eine in Umfangsrichtung profilierte Oberfläche aufweist, die mit der Sensoreinrichtung (2) einen Eingriff bildet.

2. Maschinenelement (1, 32) nach Anspruch 1, **dadurch gekennzeichnet, dass** die erste radial nach innen ragende Ausformung (12) und/oder die zweite radial nach innen ragende Ausformung (20) eine in einem Winkel zu einer Mittenachse (11) des Hohlwellenabschnitts geneigte Anschlagfläche (13, 21) aufweist.

3. Maschinenelement (1, 32) nach Anspruch 1 oder Anspruch 2, **dadurch gekennzeichnet, dass** die erste radial nach innen ragende Ausformung (12) und/oder die zweite radial nach innen ragende Ausformung (20) in Umfangsrichtung eine gleichbleibende Querschnittsfläche aufweisen.

4. Maschinenelement (1, 32) nach einem der Ansprüche 1 bis 3, **dadurch gekennzeichnet, dass** die Sensoreinrichtung (2) eine erste Stirnseite (15) und/oder eine zweite Stirnseite (17) mit einem umlaufenden Randbereich und mit einer in dem Randbereich ausgebildeten Fase aufweist.

5. Maschinenelement (1, 32) nach einem der vorangehenden Ansprüche, **dadurch gekennzeichnet, dass** die Sensoreinrichtung (2) eine erste Stirnseite (15) und/oder eine zweite Stirnseite (17) mit einem umlaufenden Randbereich mit einer in Umfangsrichtung profilierten Formgebung aufweist, die mit der ersten radial nach innen ragenden Ausformung (12) beziehungsweise mit der zweiten radial nach innen ragenden Ausformung (20) einen Eingriff bildet.

6. Maschinenelement (1, 32) nach Anspruch 5, **dadurch gekennzeichnet, dass** der umlaufende Randbereich der ersten Stirnseite (15) und/oder der zweiten Stirnseite (17) mit der in Umfangsrichtung profilierten Formgebung eine in einem Winkel zur Mittenachse (11) geneigte Kontaktfläche bildet und durch die geneigte Kontaktfläche die axiale Vorspannung der Sensoreinrichtung (2) vorgegeben wird.

7. Maschinenelement (1, 32) nach einem der vorangehenden Ansprüche, **dadurch gekennzeichnet, dass** die Sensoreinrichtung (2) eine an eine Formgebung der ersten, beziehungsweise zweiten radial nach innen ragenden Ausformung (12, 20) angepasste Formgebung einer ersten Stirnseite (15) und/oder einer zweiten Stirnseite (17) der Sensoreinrichtung (2) aufweist.

8. Maschinenelement (1, 32) nach einem der vorangehenden Ansprüche, **dadurch gekennzeichnet, dass** die Sensoreinrichtung (2) mindestens einen Verformungssensor (23) aufweist.

9. Maschinenelement (1, 32) nach einem der vorangehenden Ansprüche, **dadurch gekennzeichnet, dass** das Maschinenelement eine Welle (32) oder eine Hohlwelle (1) ist.

10. Verfahren zur Herstellung eines Maschinenelements (1, 32) mit einem Hohlwellenabschnitt und mit einer darin angeordneten Sensoreinrichtung (2) zur Messung einer sich auf den Hohlwellenabschnitt auswirkenden mechanischen Beanspruchung, wobei die Sensoreinrichtung (2) mit einer axialen Vorspannung zwischen einer ersten radial nach innen vorspringenden Ausformung (12) und einer zweiten radial nach innen vorspringenden Ausformung (20) formschlüssig festgelegt wird, **dadurch gekennzeichnet, dass** in einem ersten Ausformungsschritt eine erste radial nach innen vorspringende Ausformung (12) in dem Hohlwellenabschnitt des Maschinenelements (1, 32) erzeugt wird, wobei in einem nachfolgenden Sensoranordnungsschritt eine Sensoreinrichtung (2) in dem Hohlwellenabschnitt an der ersten radial nach innen vorspringenden Ausformung (12) formschlüssig angelegt wird und wobei in einem nachfolgenden Festlegungsschritt eine zweite radial nach innen vorspringende Ausformung (20) in dem Hohlwellenabschnitt erzeugt wird, wobei mit einem in den Hohlwellenabschnitt eingeführten Dorn (4) eine in Umfangsrichtung profilierte Formgebung der ersten und/oder zweiten radial nach innen vorspringenden Ausformung (12, 20) vorgegeben wird.

11. Verfahren nach Anspruch 10, **dadurch gekennzeichnet, dass** die erste radial nach innen vorspringende Ausformung (12) und die zweite radial nach innen vorspringende Ausformung (20) durch Kaltmassivumformung erzeugt werden.

12. Verfahren nach Anspruch 11, **dadurch gekennzeichnet, dass** die radial nach innen vorspringenden Ausformungen (12, 20) durch Rundkneten erzeugt werden.

13. Verfahren nach einem der Ansprüche 10 bis 12, **dadurch gekennzeichnet, dass** durch die profilierten Stirnseiten (15, 17) der Sensoreinrichtung (2) eine in Umfangsrichtung profilierte Formgebung der ersten und/oder zweiten radial nach innen vorspringenden Ausformungen (12, 20) vorgegeben wird.

## Claims

1. Machine element (1, 32) comprising a hollow-shaft portion and comprising a sensor device (2) for detecting a mechanical stress acting on the hollow-shaft portion, wherein the sensor device (2) is arranged in the hollow-shaft portion, wherein the hollow-shaft portion comprises a first radially inwardly projecting formation (12) and a second radially inwardly projecting formation (20), and wherein the sensor device (2) is secured in a form-fitting manner with axial preloading between the first radially inwardly projecting formation (12) and the second radially inwardly projecting formation (20), **characterised in that** a stop surface (13) of the first radially inwardly projecting formation (12) and/or a stop surface (21) of the second radially inwardly projecting formation (20) comprises a surface that is profiled in the peripheral direction and forms an engagement with the sensor device (2) .

2. Machine element (1, 32) according to claim 1, **characterised in that** the first radially inwardly projecting formation (12) and/or the second radially inwardly projecting formation (20) comprises a stop surface (13, 21) that is inclined at an angle to a central axis (11) of the hollow-shaft portion.

3. Machine element (1, 32) according to claim 1 or claim 2, **characterised in that** the first radially inwardly projecting formation (12) and/or the second radially inwardly projecting formation (20) have a constant cross-sectional area in the peripheral direction.

4. Machine element (1, 32) according to any of claims 1 to 3, **characterised in that** the sensor device (2) comprises a first end face (15) and/or a second end face (17) having a peripheral edge region and having a bevel formed in the edge region.

5. Machine element (1, 32) according to any of the preceding claims, **characterised in that** the sensor device (2) comprises a first end face (15) and/or a second end face (17) having a peripheral edge region having a shaping that is profiled in the peripheral direction and forms an engagement with the first radially inwardly projecting formation (12) or the second radially inwardly projecting formation (20).

6. Machine element (1, 32) according to claim 5, **characterised in that** the peripheral edge region of the first end face (15) and/or the second end face (17) having the shaping that is profiled in the peripheral direction forms a contact surface inclined at an angle to the central axis (11) and the axial preloading of the sensor device (2) is predetermined by the inclined contact surface.

7. Machine element (1, 32) according to any of the preceding claims, **characterised in that** the sensor device (2) has a shaping of a first end face (15) and/or a second end face (17) of the sensor device (2), which shaping is adapted to a shaping of the first or second radially inwardly projecting formation (12, 20).

8. Machine element (1, 32) according to any of the preceding claims, **characterised in that** the sensor device (2) comprises at least one deformation sensor (23).

9. Machine element (1, 32) according to any of the preceding claims, **characterised in that** the machine element is a shaft (32) or a hollow shaft (1).

10. Method for producing a machine element (1, 32) comprising a hollow-shaft portion and comprising a sensor device (2) arranged therein for measuring a mechanical stress acting on the hollow-shaft portion, wherein the sensor device (2) is secured in a form-fitting manner with axial preloading between a first radially inwardly protruding formation (12) and a second radially inwardly protruding formation (20), **characterised in that**, in a first shaping step, a first radially inwardly protruding formation (12) is produced in the hollow-shaft portion of the machine element (1, 32), wherein, in a subsequent sensor-arranging step, a sensor device (2) is attached in a form-fitting manner to the first radially inwardly protruding formation (12) in the hollow-shaft portion, and wherein, in a subsequent securing step, a second radially inwardly protruding formation (20) is produced in the hollow-shaft portion, wherein a shaping of the first and/or second radially inwardly protruding formation (12, 20) that is profiled in the peripheral direction is predetermined by a mandrel (4) inserted into the hollow-shaft portion.

11. Method according to claim 10, **characterised in that** the first radially inwardly protruding formation (12) and the second radially inwardly protruding formation (20) are produced by cold forming.

12. Method according to claim 11, **characterised in that** the radially inwardly protruding formations (12, 20) are produced by rotary swaging.

13. Method according to any of claims 10 to 12, **characterised in that** a shaping of the first and/or the second radially inwardly protruding formations (12, 20) that is profiled in the peripheral direction is predetermined by the profiled end faces (15, 17) of the sensor device (2).

## Revendications

1. Élément de machine (1, 32) comprenant une partie d'arbre creux et un dispositif de détection (2) pour détecter une contrainte mécanique agissant sur la partie d'arbre creux, le dispositif de détection (2) étant disposé dans la partie d'arbre creux, la partie d'arbre creux présentant une première protubérance (12) faisant saillie radialement vers l'intérieur et une seconde protubérance (20) faisant saillie radialement vers l'intérieur, et le dispositif de détection (2) étant immobilisé par complémentarité de forme, avec une précontrainte axiale, entre la première protubérance (12) faisant saillie radialement vers l'intérieur et la seconde protubérance (20) faisant saillie radialement vers l'intérieur, **caractérisé en ce qu'**une surface de butée (13) de la première protubérance (12) faisant saillie radialement vers l'intérieur et/ou une surface de butée (21) de la seconde protubérance (20) faisant saillie radialement vers l'intérieur présente une surface profilée dans la direction circonférentielle, qui forme un engrènement avec le dispositif de détection (2).

2. Élément de machine (1, 32) selon la revendication 1, **caractérisé en ce que** la première protubérance (12) faisant saillie radialement vers l'intérieur et/ou la seconde protubérance (20) faisant saillie radialement vers l'intérieur présente une surface de butée (13, 21) inclinée selon un angle par rapport à un axe central (11) de la partie d'arbre creux.

3. Élément de machine (1, 32) selon la revendication 1 ou la revendication 2, **caractérisé en ce que** la première protubérance (12) faisant saillie radialement vers l'intérieur et/ou la seconde protubérance (20) faisant saillie radialement vers l'intérieur présentent une aire de section transversale constante dans la direction circonférentielle.

4. Élément de machine (1, 32) selon l'une des revendications 1 à 3, **caractérisé en ce que** le dispositif de détection (2) présente une première face frontale (15) et/ou une seconde face frontale (17) avec une zone de bord périphérique et avec un chanfrein réalisé dans la zone de bord.

5. Élément de machine (1, 32) selon l'une des revendications précédentes, **caractérisé en ce que** le dispositif de détection (2) présente une première face frontale (15) et/ou une seconde face frontale (17) avec une zone de bord périphérique avec une forme profilée dans la direction circonférentielle, qui forme un engrènement avec respectivement la première protubérance (12) faisant saillie radialement vers l'intérieur et la seconde protubérance (20) faisant saillie radialement vers l'intérieur.

6. Élément de machine (1, 32) selon la revendication 5, **caractérisé en ce que** la zone de bord périphérique de la première face frontale (15) et/ou de la seconde face frontale (17) forme, avec la forme profilée dans la direction circonférentielle, une surface de contact inclinée selon un angle par rapport à l'axe central (11) et la précontrainte axiale du dispositif de détection (2) est prédéfinie par la surface de contact inclinée.

7. Élément de machine (1, 32) selon l'une des revendications précédentes, **caractérisé en ce que** le dispositif de détection (2) présente une forme d'une première face frontale (15) et/ou d'une seconde face frontale (17) du dispositif de détection (2) adaptée à une forme respectivement de la première et de la seconde protubérance (12, 20) faisant saillie radialement vers l'intérieur.

8. Élément de machine (1, 32) selon l'une des revendications précédentes, **caractérisé en ce que** le dispositif de détection (2) présente au moins un capteur de déformation (23) .

9. Élément de machine (1, 32) selon l'une des revendications précédentes, **caractérisé en ce que** l'élément de machine est un arbre (32) ou un arbre creux (1).

10. Procédé de fabrication d'un élément de machine (1, 32) comprenant une partie d'arbre creux et un dispositif de détection (2) disposé dans celle-ci pour mesurer une contrainte mécanique agissant sur la partie d'arbre creux, dans lequel le dispositif de détection (2) est immobilisé par complémentarité de forme, avec une précontrainte axiale, entre une première protubérance (12) faisant saillie radialement vers l'intérieur et une seconde protubérance (20) faisant saillie radialement vers l'intérieur, **caractérisé en ce que**, dans une première étape de façonnage, une première protubérance (12) faisant saillie radialement vers l'intérieur est générée dans la partie d'arbre creux de l'élément de machine (1, 32), dans lequel, dans une étape suivante de disposition de capteur, un dispositif de détection (2) est appliqué par complémentarité de forme dans la partie d'arbre creux contre la première protubérance (12) faisant saillie vers l'intérieur, et dans lequel, dans une étape suivante d'immobilisation, une seconde protubérance (20) faisant saillie radialement vers l'intérieur est générée dans la partie d'arbre creux, dans lequel une forme profilée dans la direction circonférentielle de la première et/ou seconde protubérance (12, 20) faisant saillie radialement vers l'intérieur est prédéfinie avec un mandrin (4) introduit dans la partie d'arbre creux.

11. Procédé selon la la revendication 10, **caractérisé en ce que** la première protubérance (12) faisant saillie radialement vers l'intérieur et la seconde protubérance (20) faisant saillie radialement vers l'intérieur sont générées par matriçage à froid.

12. Procédé selon la revendication 11, **caractérisé en ce que** les protubérances (12, 20) faisant saillie radialement vers l'intérieur sont générées par rétreint.

13. Procédé selon l'une des revendications 10 à 12, **caractérisé en ce qu'**une forme profilée dans la direction circonférentielle de la première et/ou seconde protubérance (12, 20) faisant saillie radialement vers l'intérieur est prédéfinie par les faces frontales (15, 17) profilées du dispositif de détection (2).
